(19) Europäisches Patentamt
European Patent Office
Office européen des brevets

(11) **EP 4 617 322 A1**

(12) **EUROPEAN PATENT APPLICATION**
published in accordance with Art. 153(4) EPC

(43) Date of publication:
**17.09.2025 Bulletin 2025/38**

(21) Application number: 23888384.7

(22) Date of filing: **29.09.2023**

(51) International Patent Classification (IPC):
***C08L 93/04*** (2006.01)   ***C08K 3/013*** (2018.01)
***C08L 91/06*** (2006.01)   ***C09K 5/14*** (2006.01)

(52) Cooperative Patent Classification (CPC):
**C08K 3/013; C08L 91/06; C08L 93/04; C09K 5/14**

(86) International application number:
**PCT/JP2023/035727**

(87) International publication number:
**WO 2024/101031 (16.05.2024 Gazette 2024/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.11.2022 JP 2022180619**

(71) Applicant: SUMITOMO METAL MINING CO., LTD.
**Tokyo
105-8716 (JP)**

(72) Inventor: **OZAWA, Makoto
Ome-shi, Tokyo 198-8601 (JP)**

(74) Representative: **TBK
Bavariaring 4-6
80336 München (DE)**

(54) **HEAT-CONDUCTIVE COMPOSITION AND HEAT-DISSIPATING GREASE**

(57)   [Subject] To provide a thermally conductive composition excellent in heat dissipation performance and free from bolt loosening

[Measures for solution] The thermally conductive composition contains a first inorganic powder filler with a mean particle diameter of 10 to 100 $\mu$m, a second inorganic powder filler with a mean particle diameter of 1 to 50 $\mu$m, and a third inorganic powder filler with a mean particle diameter of 0.1 to 5 $\mu$m, wherein the mean particle diameter ratio of the second inorganic powder filler to the first inorganic powder filler is 0.8 or less, the mean particle diameter ratio of the third inorganic powder filler to the second inorganic powder filler is 0.6 or less, and wherein, relative to 100 vol% of the entire inorganic powder filler, a content of the first inorganic powder filler is 40 to 80 vol%, a content of the second inorganic powder filler is 10 to 50 vol%, and a content of the third inorganic powder filler is 10 to 40 vol%; and further contains a base oil, a wax-based resin with a penetration of 5 or more and a melting point of 40 to 150°C, and a rosin-based resin with a melting point of 40 to 150°C, wherein, relative to 100 parts by volume of the total content of the wax-based resin and the rosin-based resin, a content of the base oil is 100 to 1000 parts by volume, and a content of the wax-based resin is 10 to 60 vol%.

EP 4 617 322 A1

**Description**

**TECHNICAL FIELD**

The present invention relates to a thermally conductive composition used between heat-generating components and heat-dissipating components, and a thermal grease containing the thermally conductive composition and a solvent.

**BACKGROUND ART**

In electronic equipment, a heat-dissipating component such as a heat sink made of aluminum, copper, or other metal material with high thermal conductivity is installed, to dissipate heat generated from heat-generating components such as semiconductor elements and mechanical parts. To improve the efficiency of heat transfer to the heat-dissipating component, a thermally conductive member is placed between the heat-generating components and the heat-dissipating component. There are different types of thermally conductive materials, such as thermal sheet (solid) and thermal grease (liquid), which are used according to the application. The technique related to the thermal grease is described, for example, in the following

Patent Document 1.

Although thermal sheets have excellent workability with their easy-handling nature, it is difficult to make them thinner due to the limited shape of filler applicable thereto.
In addition, since thermal sheets cannot conform to fine undulation of the surfaces of electronic components and heat sinks, the resulting gaps cause large contact thermal resistance, to hinder heat dissipation.
In the formulation of thermal grease, on the other hand, there are fewer limitations on the selection of fillers. This allows for flexibility in adjusting the filler content and fluidity, making it possible to produce grease with excellent applicability to surfaces. As a result, the grease can effectively fill the gaps between electronic components and a heat sink, ensuring efficient heat dissipation.
Thermal grease tends to thin easily. Being paste-like at room temperature and fluid under pressure, it is easily applied to a surface as a thin film and shows good adhesion. However, the same property also causes the grease to flow out from the applied area during repeated heating and cooling cycles, leading to the drawback known as pump-out.
To overcome these drawbacks, research and development have been directed toward thermally conductive materials that combine the handling ease of thermal resin sheets and the low thermal resistance characteristics of thermal grease, while also offering superior pump-out resistance compared to thermal grease. One such material under active development is the phase change material (PCM), which remains solid at room temperature but softens upon absorbing heat after being incorporated into heat-generating components. This softening allows it to conform closely to the substrate, thereby reducing thermal resistance. Techniques related to phase change materials are disclosed, for example, in Patent Documents 2 and 3.

**PRIOR ART DOCUMENTS**

**PATENT DOCUMENTS**

Patent Document 1: JP Patent No. 4713161
Patent Document 2: JP Patent No. 3794996
Patent Document 3: Int'l Pub. No. WO2016/185936

**SUMMARY OF THE INVENTION**

**PROBLEMS TO BE SOLVED BY THE INVENTION**

A phase change material (PCM) is a thermally conductive composition that remains solid at room temperature but softens upon absorbing heat after being incorporated into heat-generating components. This softening allows it to exhibit excellent adhesion to the substrate, thereby reducing thermal resistance. PCMs can simultaneously provide high thermal conductivity and phase-change properties.
However, although PCMs are easy to handle due to their solid state at room temperature, they cannot be applied by printing onto fine structures or patterns. To address this limitation, one approach involves softening the thermally conductive composition by using a volatile solvent to convert it into a paste-like or liquid thermal grease, making it suitable for printing. Nevertheless, if the viscosity, fluidity, or smoothness of the thermally conductive composition used as the base material for the thermal grease is inappropriate, printing defects such as blurring or smearing may occur even after solvent adjustment. These defects can compromise the shape retention of the printed material and result in inadequate heat dissipation performance.

In order for the thermal grease, which has been converted into a paste-like or liquid form by addition of a volatile solvent, to fully exhibit the functionality of a phase change material (PCM), it is necessary to dry the grease after printing to remove the volatile solvent. If any solvent residue remains in the thermal grease after printing, it may degrade adhesion or result in the release of solvent components after assembly, potentially causing malfunction or reliability issues. Typically, the drying process for the volatile solvent in a thermal grease involves heating at 60 to 80°C after printing. Therefore, it is preferable to use volatile solvents that can be reliably removed within this temperature range. After drying, the thermally conductive composition is placed between a heat-generating component and a heat sink, and the two parts are tightened together, for example, using bolts. During this process, a certain load is applied while tightening the bolts to secure the assembly, followed by additional heating, which enables the applied thermally conductive composition to soften, wet the surfaces, and spread over the module. However, since the PCM-based thermally conductive composition is solid at room temperature but softens upon heating, its fluidity increases during the heating process. This softening may cause loosening of the bolts.

This loosening of the bolts is considered to occur due to the difference in thickness of the thermally conductive composition between the time of tightening and after softening upon heating. When the bolts loosen, the resulting looseness of the assembly leads to poor adhesion and reduced heat dissipation performance. Furthermore, if the PCM-based thermally conductive composition fixed with bolts between the heat-generating component and the heat-dissipating component is used in a loosened state, not only does the heat dissipation performance deteriorate, but it may also result in damage to the components.

In the conventional art described above, countermeasures against such printability issues and bolt loosening have been insufficient. Therefore, there is a need to develop PCMs that offer improved workability and heat dissipation performance, while minimizing bolt loosening caused by deformation differences between the state during tightening and after softening upon heating.

The present invention has been made in view of the circumstances described above, and its objective is to provide a thermally conductive composition that is used as a thermally conductive member clamped at the thermal interface between a heat-generating component and a heat-dissipating component such as a heat sink for cooling electronic components, the composition being characterized by excellent heat dissipation performance and stable clamping without loosening. The thermally conductive composition is also suitable for use as a thermal sheet.

Another objective of the present invention is to provide a thermal grease with improved workability, which is capable of being applied by screen printing or similar techniques. This thermal grease is produced by making a thermally conductive composition, which exhibits phase change characteristics, paste-like or liquid in its initial state before use by incorporating a volatile solvent.

A further objective of the present invention is to provide a thermal grease that, through appropriate selection of constituent materials, exhibits excellent printability and, after application and solvent volatilization, forms a thermally conductive composition that resists significant viscosity reduction, softening, or melting within the operating temperature range of electronic components, thereby preventing flowout-issues commonly observed in conventional grease products.

## MEASURES TO SOLVE THE ISSUES

The inventor of the present invention conducted extensive studies to address the above issues and, as a result, found that these issues can be resolved by optimizing the type, blending ratio, and particle diameter ratio of inorganic powder fillers constituting the thermally conductive composition, as well as the type and blending ratio of base oil, wax-based resin, and rosin-based resin. Furthermore, the inventor discovered that selecting an appropriate volatile solvent as needed enables the composition to be provided in a grease-like form with improved handling properties.

That is, a thermally conductive composition according to one aspect of the present invention contains an inorganic powder filler (A), a base oil (B), a wax-based resin (C), and a rosin-based resin (D), characterized in that:

the inorganic powder filler (A) includes three or more types of powder having different mean particle diameters, one of the types of powder being a first inorganic powder filler having a mean particle diameter that is largest, another of the types of powder being a second inorganic powder filler having a mean particle diameter that is second largest, and still another of the types of powder being a third inorganic powder filler having a mean particle diameter that is third largest; the mean particle diameter of the first inorganic power filler is 10 $\mu$m or more and 100 $\mu$m or less, the mean particle diameter of the second inorganic powder filler is 1 $\mu$m or more and 50 $\mu$m or less, and the mean particle diameter of the third inorganic powder filler is 0.1 $\mu$m or more and 5 $\mu$m or less;

the ratio of the mean particle diameter of the second inorganic powder filler to the mean particle diameter of the first inorganic powder filler is 0.8 or less, and the ratio of the mean particle diameter of the third inorganic powder filler to the mean particle diameter of the second inorganic powder filler is 0.6 or less;

regarding volume content relative to 100 vol% of the inorganic powder filler (A), the content of the first inorganic powder filler is 40 vol% or more and 80 vol% or less, the content of the second inorganic powder filler is 10 vol% or more and 50 vol% or less, and the content of the third inorganic powder filler is 10 vol% or more and 40 vol% or less;

the wax-based resin (C) has a penetration of 5 or more and a melting point of 40°C or more and 150°C or less, and the rosin-based resin (D) has a melting point of 40°C or more and 150°C or less;

regarding volume content relative to 100 parts by volume of the total content of the wax-based resin (C) and the rosin-based resin (D), the content of the base oil (B) is 100 parts by volume or more and 1000 parts by volume or less; and

regarding volume content relative to 100 vol% of the total content of the wax-based resin (C) and the rosin-based resin (D), the content of the wax-based resin (C) is 10 vol% or more and 60 vol% or less.

In the thermally conductive composition according to one aspect of the present invention, it is preferable that the base oil (B) includes at least one material selected from mineral oils, synthetic hydrocarbon oils, diesters, polyol esters, and phenyl ethers.

In the thermally conductive composition according to one aspect of the present invention, it is preferable that the wax-based resin (C) includes at least one material selected from paraffin-based waxes, ester-based waxes, polyolefin-based waxes, and acrylic resins.

In the thermally conductive composition according to one aspect of the present invention, it is preferable that the inorganic powder filler (A) includes at least one material selected from copper, aluminum, zinc oxide, magnesium oxide, aluminum oxide, aluminum nitride, and silicon carbide.

In the thermally conductive composition according to one aspect of the present invention, it is preferable that the thermally conductive composition further contains at least one of a thixotropic agent (E), a surfactant (F), and a bleed-out inhibitor (G).

In addition, a thermal grease according to one aspect of the present invention is characterized by containing the thermally conductive composition according to any of the aforementioned aspects and a volatile solvent.

**EFFECT OF THE INVENTION**

According to the present invention, a thermally conductive composition can be obtained that is useful as a heat dissipation material for CPUs, power semiconductors, and the like. This composition is disposed between a heat-generating component and a heat-dissipating component such as a heat sink, and efficiently dissipates heat by adhering closely to the substrate through viscosity reduction, softening, or melting within the operating temperature range of electronic components. Furthermore, since the composition is siloxane-free, it does not cause contact failure, ensuring excellent long-term reliability of electronic devices. Furthermore, by adding a volatile solvent to form the composition into a thermal grease, it becomes possible to apply and position the composition by printing, even on shapes where installation of the composition in sheet form would be difficult.

**MODE FOR CARRYING OUT THE INVENTION**

The present invention will now be described in further detail as follows.

Inorganic Powder Filler (A)

The selection of the inorganic powder filler used in the thermally conductive composition of the present invention is not particularly limited, provided it has higher thermal conductivity than the base oil. Powders of materials such as metal oxides, inorganic nitrides, metals, or silicon compounds can be suitably used. The inorganic powder filler may contain a single kind of material or a combination of two or more kinds of materials.

When electrical insulation is required, powders of non-conductive materials such as semiconductors or ceramics, including zinc oxide, magnesium oxide, aluminum oxide, aluminum nitride, boron nitride, silicon carbide, silica, and diamond, can be suitably used. Among these, powders of zinc oxide, magnesium oxide, aluminum oxide, aluminum nitride, boron nitride, silicon carbide, and silica are preferred, with powders of zinc oxide, magnesium oxide, aluminum oxide, aluminum nitride, and silicon carbide being particularly preferred. These inorganic powder fillers may be used individually or in combination of two or more kinds of materials. On the other hand, when higher thermal conductivity is prioritized over electrical insulation, metal powders such as aluminum, silver, and copper can be suitably used, with aluminum and copper powders being preferred. The metal powders may also be used in combination with the non-conductive powders mentioned above.

The inorganic powder filler contains at least three types of powders having different mean particle diameters, including a first inorganic powder filler having a mean particle diameter in the range of 10 μm to 100 μm, a second inorganic powder filler having a mean particle diameter in the range of 1 μm to 50 μm, and a third inorganic powder filler having a mean particle diameter in the range of 0.1 μm to 5 μm, wherein the mean particle diameter of the first inorganic powder filler is the largest, the mean particle diameter of the second inorganic powder filler is the second largest, and the mean particle diameter of the third inorganic powder filler is the third largest. A plurality of kinds of inorganic powder fillers of different materials may be contained, provided that their mean particle diameters are the same.

The inorganic powder filler used in the thermally conductive composition of the present invention is composed of a combination of inorganic powder fillers having different mean particle diameters, wherein the mean particle diameter of each filler is 100 μm or less and satisfies the following relational expressions (1) and (2). The reason for limiting the mean particle diameter of the inorganic powder fillers to 100 μm or less is that using fillers with a mean particle diameter exceeding 100 μm deteriorates the fluidity of the composition. It is considered that coarse inorganic powder fillers exceeding 100 μm tend to generate turbulence within the fluid, and finer particles are not uniformly embedded among the larger particles, thereby impairing fluidity.

The ratios of the mean particle diameters of the respective inorganic powder fillers are represented by the following relational expressions (1) and (2), where the value of $R_1$ is 0.8 or less and the value of $R_2$ is 0.6 or less. If the value of $R_1$ exceeds 0.8 or the value of $R_2$ exceeds 0.6, high frictional force is generated between the inorganic powder fillers, making it difficult to form a thin film and thus impeding the achievement of low thermal resistance, as well as deteriorating printability, which is undesirable.

$$\text{(Relational Expression 1)} \quad R_1 = D_2 \,/\, D_1$$

[where $R_1$ represents the ratio of the mean particle diameter of the second inorganic powder filler to that of the first inorganic powder filler, $D_1$ represents the mean particle diameter of the first inorganic powder filler, and $D_2$ represents the mean particle diameter of the second inorganic powder filler.]

$$\text{(Relational Expression 2)} \quad R_2 = D_3 \,/\, D_2$$

[where $R_2$ represents the ratio of the mean particle diameter of the third inorganic powder filler to that of the second inorganic powder filler, $D_2$ represents the mean particle diameter of the second inorganic powder filler, and $D_3$ represents the mean particle diameter of the third inorganic powder filler.]

Furthermore, an inorganic powder filler having a mean particle diameter smaller than that of the third inorganic powder filler may additionally be included, provided that the relational expressions (1) and (2) are satisfied and that such inclusion does not adversely affect properties such as fluidity during heating.

The inorganic powder filler used in the thermally conductive composition of the present invention contains, relative to 100 vol% total content of the inorganic powder filler, the first inorganic powder filler in an amount of 40 vol% or more and 80 vol% or less, the second inorganic powder filler in an amount of 10 vol% or more and 50 vol% or less, and the third inorganic powder filler in an amount of 10 vol% or more and 40 vol% or less.

Base Oil (B)

There are no particular limitations on the base oil used; however, it is preferably at least one selected from mineral oils, synthetic hydrocarbon oils, diesters, polyol esters, and phenyl ethers. Much preferably, the base oil is selected from mineral oils, polyalphaolefins, ester oils, and phenyl ethers. Furthermore, it is desirable that the oil is compatible with polysulfides, which are corrosion-resistant additives.

Wax-Based Resin (C)

The wax-based resin is contained as a material to solidify the thermally conductive composition at room temperature and to maintain its shape. A resin having a melting point of 40°C or more and 150°C or less and a penetration of 5 or more is used. Having a melting point within this range allows the resin to remain solid at room temperature, while softening easily upon heating and becoming a low-viscosity liquid. Furthermore, a material having a penetration of 5 or more ensures that the resin retains adequate flexibility in its solid state. If a wax with a penetration lower than 5 is used, the grease does not spread sufficiently when the module and heat sink are tightened together, resulting in a wider joining gap, which may cause significant grease flow during heating and lead to loosening of bolts. By using a wax with a higher penetration of 5 or more, the thermally conductive composition deforms more easily during the process of tightening at room temperature, allowing the film thickness to be reduced to some extent. As a result, variations in the joining gap caused by flow during heating can be moderated, making bolt loosening less likely to occur. Additionally, by adding a volatile solvent to provide the composition in the form of a thermal grease at the time of coating, the film thickness can be reduced more easily.

The reason for setting the melting point of the wax-based resin to 40°C or more and 150°C or less is that, if the melting point is lower than 40°C, the resin may soften due to heat generated during processing and flow out of the designated position. On the other hand, if the melting point exceeds 150°C, the resin may not soften at all under the heat generated by the heat-generating components, resulting in insufficient stress relaxation. It should be noted that, since the heat generation temperature of heat-generating components such as semiconductor devices or mechanical parts varies depending on the application field, it is preferable to select a wax-based resin having an appropriate melting point according to the intended application.

Rosin-Based Resin (D)

By using a rosin-based resin having a melting point of 40°C or more and 150°C or less, heat resistance is imparted to the thermally conductive composition, and its viscosity can be adjusted. Furthermore, when a volatile solvent is added to render the composition into a grease form, the rosin-based resin improves the smoothness of the formed film, thereby enhancing printability and facilitating release from the printing plate during printing.

The combined use of the wax-based resin and the rosin-based resin improves the shape retention of the grease after printing, even when the thermally conductive composition is applied as a thermal grease, and enhances adhesion to heat-generating components such as modules. Additionally, since the wax-based resin alone is inferior in deformation performance after heating, the addition of the rosin-based resin improves deformation performance after heating. The melting point of the rosin-based resin, like that of the wax-based resin, may be selected appropriately according to the application field of the heat-generating component.

The content of the base oil (B) is 100 parts by volume or more and 1000 parts by volume or less relative to 100 parts by volume of the total content of the wax-based resin (C) and the rosin-based resin (D). The proportion of the wax-based resin (C) is 10 vol% or more and 60 vol% or less relative to 100 vol% of the total content of the wax-based resin (C) and the rosin-based resin (D). If the content of the base oil is less than 100 parts by volume, the thermally conductive composition becomes hard with low fluidity, resulting in an uneven printed shape with an increased risk of skipping. On the other hand, if the content exceeds 1000 parts by volume, the thermally conductive composition becomes excessively fluid, making it prone to sagging. In such a case, the printed shape may not be maintained at the time of dispensing, or even if the shape is initially retained, the thermally conductive composition may later be displaced from its designated position due to thermal deformation of the module during operation, causing what is known as the pump-out phenomenon.

Additionally, the total content of the base oil (B), the wax-based resin (C), and the rosin-based resin (D) is preferably 10 vol% or more and 40 vol% or less relative to 100 vol% of the thermally conductive composition. If the total content is less than 10 vol%, the thermally conductive composition may fail to form an integrated structure. Conversely, if it exceeds 40 vol%, the liquid components may flow out due to pump-out or other effects during heating, which is undesirable.

Thixotropy Modifier (E)

A thixotropy modifier is an optional additive that may be included as needed to induce appropriate thixotropic properties when the thermally conductive composition becomes liquid upon heat generation. There are no particular limitations on the thixotropy modifier, and materials commonly used in general greases can be employed. However, it is preferable to use at least one selected from bentonite, mica, kaolin, sepiolite, saponite, hectorite, lithium complex soap, aluminum complex soap, carbon nanotubes, and cellulose nanofibers. The inclusion of a thixotropy modifier can further improve the shape retention of the composition when rendered into a thermal grease.

The content of the thixotropy modifier is preferably 1 part by volume or more and 10 parts by volume or less relative to 100 parts by volume of the base oil.

Surfactant (F)

A surfactant is an optional component that may be added as needed to uniformly disperse the ingredients in the thermally conductive composition during molten stirring in the manufacturing process. There are no particular limitations on the surfactant, and it may be appropriately selected based on compatibility with the other ingredients. When added, it is preferable to use at least one selected from acid-type hydrocarbon polymer-based surfactants, higher fatty acid ester-based surfactants, and phosphate ester-based surfactants.

Bleed-Out Inhibitor (G)

A bleed-out inhibitor is an optional component that may be added as needed to reduce bleed-out. While there are no particular limitations on the bleed-out inhibitor, it is preferable to use a perfluoroalkyl compound-based bleed-out inhibitor.

There is no specific requirement for the amount to be added; however, it is preferable to add 0.01 mass% or more and 1.5 mass% or less relative to 100 mass% of the thermally conductive composition. If the content is less than 0.01 mass%, the intended effect may not be achieved, and even if much more than 1.5 mass% is added, no additional effects can be expected.

Volatile Solvent (H)

A volatile solvent is included to render the thermally conductive composition into a printable thermal grease. Since the thermally conductive composition of the present invention is solid at room temperature, it needs to be diluted with a solvent to bring it into a printable state.

There are no particular limitations on the volatile solvent used in the present invention; however, it is preferable that the solvent can dissolve the wax-based resin and the rosin-based resin. Much preferably, the solubility parameter is 9.0 cal$^{(1/2)}$/cm$^{(3/2)}$ or more and 13.0 cal$^{(1/2)}$/cm$^{(3/2)}$ or less. If the solubility parameter falls outside this range, the wax-based resin and the rosin-based resin used in the present invention may have reduced solubility in the volatile solvent, leading to undesirable aggregation of the inorganic powder fillers.

If the inorganic powder fillers aggregate, the film thickness may not be sufficiently reduced, preventing the desired heat dissipation properties from being achieved.

Examples of such volatile solvents include ethanol, 1-propanol, 2-propanol, 1-butanol, 2-butanol, 2-ethyl-1-butanol, 3-methyl-1-butanol, 1-pentanol, 2-pentanol, 1-hexanol, 1-heptanol, 1-octanol, 2,4-dimethyl-3-pentanol, 3-pentanol, 2-ethyl-1-hexanol, 1-nonanol, 3,5,5-trimethyl-1-hexanol, 2-methyl-3-butyn-2-ol, α-terpineol, β-terpineol, γ-terpineol, Texanol, diethylene glycol, ethylene glycol dibutyrate, diethylene glycol monobutyl ether, hexyl glycol, methylpropyl triglycol, diethylene glycol monobutyl ether, ethylene glycol monomethyl ether, ethylene glycol monoethyl ether, propylene glycol monomethyl ether, phenyl propylene glycol, dipropylene glycol monomethyl ether, cyclopentanone, cyclohexanone, 4-hydroxy-4-methyl-2-pentanone, limonene, methyl ethyl ketone, acetone, acetonitrile, 2,4,4-trimethyl-1,3-pentanediol-1-monoisobutyrate, butyl butyrate, butyl propionate, and the like.

At least one of the above-mentioned volatile solvents may be used.

The amount of the volatile solvent should be adjusted so that the shear viscosity at 6/s of the thermal grease falls within a range of 25 Pa·s or more and 250 Pa·s or less. This viscosity range is generally considered suitable for good printability. If the viscosity is less than 25 Pa·s, the composition becomes too liquid-like, making it difficult to maintain its shape after application, and sufficient printability may not be achieved. Conversely, if the viscosity exceeds 250 Pa·s, the grease becomes too stiff, making printing difficult, which is undesirable. A particular viscosity value within the above range should be selected appropriately based on printing conditions and other factors related to the usage environment.

Furthermore, the volatile solvent used in the present invention is assumed to completely evaporate during the heating and drying process after printing. If the solvent exhibits poor volatility and remains in the grease, curing becomes insufficient, making thickness control difficult when the module and heat sink are joined. Additionally, when the product is mounted, residual solvent components may have an adverse effect on surrounding components. Therefore, it is preferable to verify in advance whether the amount of solvent used to achieve the target viscosity range will sufficiently evaporate during the heating and drying process after printing.

## EMBODIMENTS

The present invention is described in detail below based on embodiments and comparative examples. However, the present invention is not limited to the following embodiments.

[Evaluation]

The formability of thermally conductive composition, the printability of prepared thermal grease, and the presence or absence of bolt loosening, which may be due to the thermally conductive composition obtained through heat treatment of the thermal grease applied to the module, were evaluated using the following methods.

(Formability of Thermally Conductive Composition (Grease Formation))

To assess formability, the prepared materials were heated, mixed, and stirred at 150°C for 30 minutes. At this stage, it was checked whether the materials had integrated into a grease-like form at 150°C. If integration appeared to be only partial, the stirring time was extended up to 60 minutes to determine whether full integration could be achieved. If the obtained thermally conductive composition successfully integrated and exhibited fluidity in a grease-like form, it was marked with "o". If the composition had clearly failed to integrate within 30 minutes of heating and mixing, or if it had not fully integrated even after extending the heating and mixing time to 60 minutes, it was marked with "×", and further evaluation was discontinued.

(Printability of Thermal Grease)

For printing onto a module, a module and a metal mask with a thickness of 130 μm were prepared. The thermal grease was applied onto the module using the metal mask in a printing process. If the printed thermal grease conformed to the shape of the metal mask without edge sagging, it was marked with "o" for good printability. If edge sagging was observed, or if the printed grease wet and spread excessively, or if skipping or chipping occurred in the printed shape, it was marked with "x" for poor printability. Additionally, if the viscosity of the grease was too high, preventing proper execution of the printing process itself, it was also marked with "×".

(Bolt Loosening)

A module with the printed thermal grease and a heat dissipating plate were fastened together with the thermal grease interposed between them at a torque of 3.5 N·m at room temperature. The assembly was then subjected to heat drying at 70°C in a drying oven for 90 minutes. After the heat drying process, the module was removed from the drying oven, sufficiently cooled, and then checked for bolt loosening by application of a torque of 2.5 N·m. If the bolt did not rotate, the torque was gradually increased in increments of 0.1 N·m up to 3.5 N·m, and the loosening was checked. If no loosening occurred and the bolt did not rotate even when the torque reached 3.5 N·m, it was marked with "○". If the bolt started to rotate while the torque was increasing from 2.5 N·m to 3.5 N·m, it was marked with "×".

(Embodiment 1)

Based on 100 vol% of the thermally conductive composition to be produced, 0.5 vol% of a thixotropy modifier, 1.6 vol% of a surfactant, and a total of 22.9 vol% of base oil, wax-based resin, and rosin-based resin, which was distributed in the proportions shown in Table 1, were prepared; the base oil accounted for 19.08 vol%, the wax-based resin 1.34 vol%, and the rosin-based resin 2.48 vol%. The prepared materials were placed into a universal mixer, heated to 150°C, and stirred continuously until the wax-based resin and the rosin-based resin were completely melted.

Additionally, 75 vol% of an inorganic powder filler was prepared in the proportions shown in Table 1: 45 vol% of alumina powder with a mean particle diameter of 20 μm (first inorganic powder filler), 15 vol% of alumina powder with a mean particle diameter of 10 μm (second inorganic powder filler), and 15 vol% of zinc oxide powder with a mean particle diameter of 3 μm (third inorganic powder filler). At this time, the mean particle diameter ratio of the first inorganic powder filler to the second inorganic powder filler was 0.5, and that of the second inorganic powder filler to the third inorganic powder filler was 0.3.

The three types of inorganic powder fillers were then added to the base oil, in which the thixotropy modifier, the wax-based resin, the rosin-based resin, and the surfactant had been dissolved. The mixture was heated to 150°C and stirred for 30 minutes to obtain the thermally conductive composition of Embodiment 1. Some of the material characteristics and compositional data are shown in Table 1.

(Grease Formation Test)

Immediately after stirring was completed, it was checked whether the obtained thermally conductive composition had integrated into a grease-like form at 150°C. As a result, it was confirmed that the composition had formed a grease-like consistency and exhibited fluidity. The evaluation results are shown in Table 2.

After confirming the grease-like integration under heated conditions, the temperature of the mixer was lowered to 70°C, and vacuum degassing was performed to remove air layers present within the thermally conductive composition.

Based on 100 parts by volume of the thermally conductive composition, 12 parts by volume of a volatile solvent, terpineol, was added, and the mixture was stirred for 5 minutes to obtain the thermal grease.

(Printability Test)

The printed thermal grease, applied using a metal mask, was examined. It was confirmed that the grease was printed successfully without skipping or smudging. The evaluation results are shown in Table 2.

(Bolt Loosening Test)

A sample, in which the printed thermal grease was placed between a module and a heat dissipating plate and fastened with a torque of 3.5 N·m, was subjected to heat drying. The bolt did not rotate at a torque of 2.5 N·m, and even when the torque was increased to 3.5 N·m, no loosening was observed. The evaluation results are shown in Table 2.

(Embodiments 2-6 and Comparative Examples 1-10)

Thermally conductive compositions and thermal greases were prepared and evaluated in the same manner as in Embodiment 1, except that the particle diameter and blending ratio of the inorganic filler, the type and blending ratio of the wax and rosin, and the blending ratio of the base oil relative to the total content of wax and rosin were modified as shown in Table 1. The evaluation results for each embodiment and comparative example are summarized in Table 2.
The first and second inorganic fillers were alumina powder, while the third inorganic filler was zinc oxide powder. Additionally, only in Embodiment 6, a fourth, finer inorganic filler was added, which was also alumina powder.

Table 1

| | Nonorganic Powder Filler | | | | | | | | | | Wax | | Rosin | Base Oil Content (Vol parts) Relative to 100vol parts of (Wax + Rosin) | Proportion of Wax in Resin (Vol%) | Proportion of Rosin in Resin (vol%) |
|---|---|---|---|---|---|---|---|---|---|---|---|---|---|---|---|---|
| | Mean Particle Diameter (μm) | | | | Blending Ratio (vol%) | | | | R1 | R2 | Melting Point (°C) | Penetration | Melting Point (°C) | | | |
| | 1st | 2nd | 3rd | 4th | 1st | 2nd | 3rd | 4th | | | | | | | | |
| Emb 1 | 20 | 10 | 3 | — | 60 | 20 | 20 | — | 0.50 | 0.30 | 43 | 30 | 50 | 500 | 35 | 65 |
| Emb 2 | 98 | 48 | 5 | — | 77 | 12 | 11 | — | 0.49 | 0.10 | 70 | 70 | 42 | 500 | 12 | 88 |
| Emb 3 | 12 | 2 | 0.2 | — | 40 | 40 | 20 | — | 0.17 | 0.10 | 140 | 7 | 140 | 100 | 58 | 42 |
| Emb 4 | 30 | 23 | 1 | — | 40 | 25 | 35 | — | 0.77 | 0.04 | 100 | 35 | 100 | 1000 | 40 | 60 |
| Emb 5 | 12 | 7 | 4 | — | 50 | 25 | 25 | — | 0.58 | 0.57 | 65 | 45 | 70 | 400 | 30 | 70 |
| Emb 6 | 11 | 3.4 | 0.5 | 0.1 | 60 | 20 | 10 | 10 | 0.31 | 0.15 | 100 | 30 | 100 | 800 | 55 | 45 |
| Comp 1 | 110 | 45 | 4 | — | 60 | 20 | 20 | — | 0.41 | 0.09 | 100 | 20 | 100 | 500 | 50 | 50 |
| Comp 2 | 80 | 52 | 6 | — | 60 | 20 | 20 | — | 0.65 | 0.12 | 120 | 20 | 120 | 400 | 40 | 60 |
| Comp 3 | 20 | 18 | 4 | — | 60 | 20 | 20 | — | 0.9 | 0.22 | 100 | 30 | 100 | 300 | 40 | 60 |
| Comp 4 | 30 | 5 | 4 | — | 55 | 30 | 15 | — | 0.17 | 0.8 | 100 | 30 | 100 | 700 | 50 | 50 |
| Comp 5 | 8 | 0.8 | 0.1 | — | 90 | 8 | 2 | — | 0.1 | 0.13 | 120 | 50 | 120 | 500 | 20 | 80 |
| Comp 6 | 40 | 20 | 3 | — | 38 | 52 | 10 | — | 0.5 | 0.15 | 65 | 20 | 70 | 90 | 40 | 60 |
| Comp 7 | 60 | 20 | 4 | — | 45 | 30 | 25 | — | 0.33 | 0.2 | 160 | 3 | 37 | 1200 | 50 | 50 |
| Comp 8 | 15 | 5 | 0.5 | — | 50 | 30 | 20 | — | 0.33 | 0.1 | 80 | 5 | 80 | 200 | 8 | 92 |
| Comp 9 | 20 | 8 | 0.8 | — | 60 | 20 | 20 | — | 0.4 | 0.1 | 80 | 40 | — | 500 | 100 | 0 |
| Comp 10 | 30 | 15 | 8 | — | 60 | 25 | 15 | — | 0.5 | 0.53 | — | | 100 | 500 | 0 | 100 |

R1 = D2/D1

R2 = D3/D2

EP 4 617 322 A1

[Table 2]

|  | Grease Formation | Printability | Bolt Loosening |
|---|---|---|---|
| Emb 1 | ○ | ○ | ○ |
| Emb 2 | ○ | ○ | ○ |
| Emb 3 | ○ | ○ | ○ |
| Emb 4 | ○ | ○ | ○ |
| Emb 5 | ○ | ○ | ○ |
| Emb 6 | ○ | ○ | ○ |
| Comp 1 | ○ | × | ○ |
| Comp 2 | ○ | × | ○ |
| Comp 3 | × | - | - |
| Comp 4 | × | - | - |
| Comp 5 | × | - | - |
| Comp 6 | × | - | - |
| Comp 7 | ○ | × | × |
| Comp 8 | ○ | × | ○ |
| Comp 9 | ○ | ○ | × |
| Comp 10 | ○ | × | ○ |

Samples from Embodiments 1-6 successfully formed a grease-like consistency through the heat-mixing of the materials. They also exhibited good printability as thermal grease and showed no bolt loosening after heat treatment, demonstrating favorable overall performance.

The sample from Comparative Example 1 was prepared using alumina powder with a mean particle diameter of 110 μm-exceeding 100 μm-as the first inorganic filler. Similarly, the sample from Comparative Example 2 was prepared using alumina powder with a mean particle diameter of 52 μm-exceeding 50 μm-as the second inorganic filler and zinc oxide powder with a mean particle diameter of 6 μm -exceeding 5 μm-as the third inorganic filler. Although both samples successfully formed a grease-like consistency and exhibited no bolt loosening after heat treatment, they exhibited poor fluidity in the form of thermal grease, leading to skipping during printing and preventing formation of a desired shape. Consequently, the samples from Comparative Examples 1 and 2 are considered to have inferior thermal conductivity.

The samples from Comparative Examples 3 and 4 had excessively small particle diameter differences-Comparative Example 3 between the first and second inorganic fillers, and Comparative Example 4 between the second and third inorganic fillers. Since these samples remained in a partially aggregated powder state even after continuous stirring, grease formation was deemed unlikely, and evaluation of these samples was discontinued. This result suggests that, due to the insufficient particle diameter difference, smaller particles of a filler could not effectively fill the spaces among larger particles of another filler(s), leading to a lower packing density of the inorganic filler, which in turn resulted in excessively large spaces among particles and shortage of the liquid component to fill the spaces completely.

The sample from Comparative Example 5, in which the mean particle diameters of the first and second inorganic fillers were too small and the blending ratio of the first inorganic filler was too high, and the sample from Comparative Example 6, in which the blending ratio of the first inorganic filler was too low while that of the second inorganic filler was too high, also failed to form a grease-like consistency even after continuous stirring, leading to the discontinuation of evaluation. This is presumably because, in Comparative Example 5, the total surface area of the fillers became excessively large, making the amount of liquid component insufficient to fully coat all powder surfaces, and in Comparative Example 6, the excessive amount of the second inorganic filler exceeded the capacity of the spaces among particles of the first inorganic filler, leading to a lower packing density of the inorganic filler and shortage of the liquid component. In addition, it seems to be another cause of the failure in Comparative Example 6 that the proportion of base oil relative to the total amount of resin was too low.

The sample from Comparative Example 7 was prepared using wax with a high melting point of 160°C and a low penetration of 3, as well as rosin with a low melting point of 37°C. Additionally, the amount of base oil was increased beyond the upper limit specified in this invention. Although this sample successfully formed a grease-like consistency, the excessive amount of base oil increased the fluidity to a level that caused sagging, interfered with edge formation in the printed product, and consequently prevented achievement of a desired print shape. In the bolt loosening test, no loosening was observed at 2.5 N·m, but at 3.0 N·m, the bolt rotated, confirming loosening. This was likely due to the fact that the melting points of the wax-based and rosin-based resins were not suitable, causing insufficient dissolution in the base oil during heat mixing. As a result, while the composition deformed under a certain level of pressure, it failed to return to its original shape. Additionally, the increased fluidity resulting from the excessive amount of base oil presumably caused some of the composition to flow out under heat and pressure.

The sample from Comparative Example 8, in which the proportion of rosin in the resin was increased while the proportion of base oil relative to the total resin content was lowered, successfully formed a grease-like consistency through heat mixing. However, the resulting thermally conductive composition had low fluidity and was relatively hard. As a result, the print shape was not smooth, exhibiting blurring and other defects, and did not achieve a desired form. Although no bolt loosening was observed, concerns remain regarding its low thermal conductivity.

The sample from Comparative Example 9, which was prepared using only a wax-based resin with no rosin-based resin, successfully formed a grease-like consistency, and the heat-dissipating grease made through addition of a volatile solvent was printed without trouble. However, bolt loosening was observed at 3.1 N·m. This is presumably because wax-based resin alone lacks sufficient deformability; while it resists deformation up to a certain pressure, it collapses beyond that threshold.

The sample from Comparative Example 10, which was prepared using only a rosin-based resin without any wax-based resin, also successfully formed a grease-like consistency, similar to the sample from Comparative Example 8. However, its printability was poor. While the rosin-based resin exhibited high deformability and prevented bolt loosening, its poor application properties during printing raise concerns about lower thermal conductivity.

**Claims**

1.   A thermally conductive composition containing:

   an inorganic powder filler (A);
   a base oil (B);
   a wax-based resin (C); and
   a rosin-based resin (D);

   **characterized in that**:

   the inorganic powder filler (A) includes three or more types of powder having different mean particle diameters, one of the types of powder being a first inorganic powder filler having a mean particle diameter that is largest, another of the types of powder being a second inorganic powder filler having a mean particle diameter that is second largest, and still another of the types of powder being a third inorganic powder filler having a mean particle diameter that is third largest;
   the mean particle diameter of the first inorganic powder filler is 10 $\mu$m or more and 100 $\mu$m or less, the mean particle diameter of the second inorganic powder filler is 1 $\mu$m or more and 50 $\mu$m or less, and the mean particle diameter of the third inorganic powder filler is 0.1 $\mu$m or more and 5 $\mu$m or less;
   a ratio of the mean particle diameter of the second inorganic powder filler to the mean particle diameter of the first inorganic powder filler is 0.8 or less, and a ratio of the mean particle diameter of the third inorganic powder filler to the mean particle diameter of the second inorganic powder filler is 0.6 or less;
   regarding volume content relative to 100 vol% of the inorganic powder filler (A), a content of the first inorganic powder filler is 40 vol% or more and 80 vol% or less, a content of the second inorganic powder filler is 10 vol% or more and 50 vol% or less, and a content of the third inorganic powder filler is 10 vol% or more and 40 vol% or less;
   the wax-based resin (C) has a penetration of 5 or more and a melting point of 40°C or more and 150°C or less;
   the rosin-based resin (D) has a melting point of 40°C or more and 150°C or less;
   regarding volume content relative to 100 parts by volume of a total content of the wax-based resin (C) and the rosin-based resin (D), a content of the base oil (B) is 100 parts by volume or more and 1000 parts by volume or less; and
   regarding volume content relative to 100 vol% of the total content of the wax-based resin (C) and the rosin-based resin (D), a content of the wax-based resin (C) is 10 vol% or more and 60 vol% or less.

2.   The thermally conductive composition according to claim 1, **characterized in that** the base oil (B) includes at least one material selected from mineral oils, synthetic hydrocarbon oils, diesters, polyol esters, and phenyl ethers.

3. The thermally conductive composition according to claim 1, **characterized in that** the wax-based resin (C) includes at least one material selected from paraffin-based waxes, ester-based waxes, polyolefin-based waxes, and acrylic resins.

4. The thermally conductive composition according to claim 1, **characterized in that** the inorganic powder filler (A) includes at least one material selected from copper, aluminum, zinc oxide, magnesium oxide, aluminum oxide, aluminum nitride, and silicon carbide.

5. The thermally conductive composition according to claim 1, **characterized by** further containing at least one of a thixotropic agent (E), a surfactant (F), and a bleed-out inhibitor (G).

6. A thermal grease **characterized by** containing the thermally conductive composition according to any of claims 1-5 and a volatile solvent (H).

## INTERNATIONAL SEARCH REPORT

International application No.

**PCT/JP2023/035727**

| A. | CLASSIFICATION OF SUBJECT MATTER |
| --- | --- |

*C08L 93/04*(2006.01)i; *C08K 3/013*(2018.01)i; *C08L 91/06*(2006.01)i; *C09K 5/14*(2006.01)i
FI: C08L93/04; C08K3/013; C08L91/06; C09K5/14 E

According to International Patent Classification (IPC) or to both national classification and IPC

| B. | FIELDS SEARCHED |
| --- | --- |

Minimum documentation searched (classification system followed by classification symbols)

C08L93/04; C08K3/013; C08L91/06; C09K5/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2021-143249 A (SUMITOMO METAL MINING CO) 24 September 2021 (2021-09-24) | 1-6 |
| A | WO 2021/182550 A1 (SUMITOMO METAL MINING CO) 16 September 2021 (2021-09-16) | 1-6 |
| A | WO 2021/182549 A1 (SUMITOMO METAL MINING CO) 16 September 2021 (2021-09-16) | 1-6 |
| A | WO 2021/182548 A1 (SUMITOMO METAL MINING CO) 16 September 2021 (2021-09-16) | 1-6 |

☐ Further documents are listed in the continuation of Box C.     ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **15 November 2023** | **28 November 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/035727**

| Patent document cited in search report | | | Publication date (day/month/year) | Patent family member(s) | | | Publication date (day/month/year) |
|---|---|---|---|---|---|---|---|
| JP | 2021-143249 | A | 24 September 2021 | (Family: none) | | | |
| WO | 2021/182550 | A1 | 16 September 2021 | US | 2023/0141794 | A1 | |
| | | | | EP | 4120337 | A1 | |
| | | | | CN | 115279838 | A | |
| WO | 2021/182549 | A1 | 16 September 2021 | US | 2023/0141757 | A1 | |
| | | | | EP | 4119616 | A1 | |
| | | | | CN | 115244138 | A | |
| WO | 2021/182548 | A1 | 16 September 2021 | US | 2023/0151259 | A1 | |
| | | | | EP | 4119615 | A1 | |
| | | | | CN | 115244137 | A | |

Form PCT/ISA/210 (patent family annex) (January 2015)

14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4713161 B
- JP 3794996 B

- WO 2016185936 A